# EUROPÄISCHE PATENTANMELDUNG

(11) **EP 4 220 460 A1**
(43) Veröffentlichungstag der Anmeldung: **02.08.2023**
(21) Anmeldenummer: 22154262.4
(22) Anmeldetag: 31.01.2022
(51) Int. Cl.: G06F 21/57, G05B 21/00

(54) **BESTIMMUNG EINER STÖRUNGSURSACHE EINER STÖRUNG IM BETRIEB EINES CYBER-PHYSISCHEN SYSTEMS**

(71) Anmelder: Siemens Aktiengesellschaft, 80333 München (DE)
(72) Erfinder: Wincheringer, Christoph, 81369 München (DE)
(74) Vertreter: Siemens Patent Attorneys

(57) **Zusammenfassung**

Die Erfindung betrifft eine Vorrichtung und ein computerimplementiertes Verfahren zur Bestimmung einer Störungsursache einer technischen Störung im Betrieb eines cyber-physischen Systems. Es werden computergestützte Simulationsmodelle eingelesen, die jeweils eingerichtet sind, den Betrieb des cyber-physischen Systems und der Steuereinheit unter Berücksichtigung einer modellierten Störung abzubilden, wobei die jeweilige modellierte Störung einen Cyberangriff auf das cyber-physische System oder eine systeminhärente Fehlfunktion des cyber-physischen Systems als Störungsursache hat. Die computergestützten Simulationsmodelle werden jeweils ausgeführt und es werden jeweils modellierte Referenzausgangssignale ausgegeben, wobei den modellierten Referenzausgangssignalen jeweils eine Störungsursache zugeordnet ist. Bei Detektion einer Störung im Betrieb des cyber-physischen Systems wird ein der Störung entsprechendes Ausgangssignal einer Steuereinheit des cyber-physischen Systems erfasst. Die Störungsursache der detektierten Störung wird dann durch Vergleich des Ausgangssignals der Steuereinheit mit den jeweils modellierten Referenzausgangssignalen ermittelt und ausgegeben.

## Beschreibung

Die Erfindung betrifft eine Vorrichtung und ein computerimplementiertes Verfahren zur Bestimmung einer Störungsursache einer technischen Störung im Betrieb eines cyber-physischen Systems, sowie ein Computerprogrammprodukt.

Eine Störung beim Betrieb eines cyber-physischen Systems, wie z.B. eines Kraftwerks, kann eine systeminhärente Fehlfunktion, wie z.B. ein Komponentenausfall oder eine Überlastung, oder ein von außen auf das System einwirkender Cyber-Angriff als Störungsursache haben. Eine Differenzierung der verschiedenen Ursachen kann schwierig und/oder zeitaufwändig sein. Allerdings ist es notwendig die Ursache für die Störung zu ermitteln, um die Störung wirksam beheben und eine Schädigung des Systems zu vermeiden oder begrenzen zu können. Bisher wurde dies in der Regel gelöst, indem während des Betriebs und insbesondere nach einem möglichen Angriff innerhalb des IT-Systems nach typischen Anzeichen von Cyber-Angriffen gesucht wurde, wie z.B. durch Analyse von Log-Daten des IT-Systems.

Es ist daher eine Aufgabe der Erfindung, eine Störungsursache einer Störung im Betrieb eines cyber-physischen Systems zu bestimmen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Bestimmung einer Störungsursache einer technischen Störung im Betrieb eines cyber-physischen Systems, umfassend:
- eine erste Schnittstelle, die derart eingerichtet ist, ein einer detektierten Störung entsprechendes Ausgangssignal einer Steuereinheit des cyber-physischen Systems zu erfassen,
- eine zweite Schnittstelle, die derart eingerichtet ist, eine Vielzahl von computergestützten Simulationsmodellen einzulesen, die jeweils eingerichtet sind, den Betrieb des cyber-physischen Systems und der Steuereinheit unter Berücksichtigung einer modellierten Störung abzubilden, wobei die jeweilige modellierte Störung einen Cyberangriff auf das cyber-physische System und/oder eine systeminhärente Fehlfunktion des cyber-physischen Systems als Störungsursache hat,
- ein Simulationsmodul, das derart eingerichtet ist, die computergestützten Simulationsmodelle auszuführen und jeweils modellierte Referenzausgangssignale auszugeben, wobei den modellierten Referenzausgangssignalen jeweils eine Störungsursache zugeordnet ist,
- ein Analysemodul, das derart eingerichtet ist, eine Störungsursache der detektierten Störung durch Vergleich des Ausgangssignals der Steuereinheit mit den jeweils modellierten Referenzausgangssignalen zu ermitteln,
   und
- ein Ausgabemodul, das derart eingerichtet ist, die ermittelte Störungsursache der detektierten Störung auszugeben.

Gemäß einem zweiten Aspekt betrifft die Erfindung ein computerimplementiertes Verfahren zur Bestimmung einer Störungsursache einer technischen Störung im Betrieb eines cyber-physischen Systems, mit den Verfahrensschritten:
- Erfassen eines einer detektierten Störung entsprechenden Ausgangssignals einer Steuereinheit des cyber-physischen Systems,
- Einlesen einer Vielzahl von computergestützten Simulationsmodellen, die jeweils eingerichtet sind, den Betrieb des cyber-physischen Systems und der Steuereinheit unter Berücksichtigung einer modellierten Störung abzubilden, wobei die jeweilige modellierte Störung einen Cyberangriff auf das cyber-physische System und/oder eine systeminhärente Fehlfunktion des cyber-physischen Systems als Störungsursache hat,
- Ausführen der computergestützten Simulationsmodelle,
- Ausgeben von jeweils modellierten Referenzausgangssignalen, denen eine jeweilige Störungsursache zugeordnet ist,
- Ermitteln einer Störungsursache der detektieren Störung durch Vergleich des Ausgangssignals der Steuereinheit mit den jeweils modellierten Referenzausgangssignalen,
   und
- Ausgeben der ermittelten Störungsursache der detektierten Störung.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Computer können beispielsweise Personal Computer, Server, eine speicherprogrammierbare Steuerung (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "cyber-physischen System" kann insbesondere eine industrielle Anlage, wie z.B. eine Produktionsanlage, eine Fabrikanlage oder eine Prozessanlage, verstanden werden. Insbesondere besteht ein cyber-physisches System aus informatischen, softwaretechnischen Komponenten mit mechanischen und elektronischen Teilen. Die Komponenten können beispielsweise über eine Datenkommunikationsverbindung miteinander kommunizieren. Insbesondere kann ein cyber-physisches System auch ein verteiltes System sein, wie zum Beispiel ein intelligentes Stromnetz oder eine komplexe Industrieproduktionsanlage.

Unter einem "computergestützten Simulationsmodell" eines cyber-physischen Systems kann insbesondere ein digitaler Zwilling des cyber-physischen Systems verstanden werden. Das computergestützte Simulationsmodell ist insbesondere dazu eingerichtet, ein technisches, Verhalten des cyber-physischen Systems abzubilden bzw. zu modellieren. Beispiele sind ein ereignisgesteuertes Simulationsmodell einer automatisierten Industrieproduktionsanlage oder ein elektrisches Simulationsmodell zur Berechnung von Lastflüssen und Kurzschluss-Strömen in intelligenten Netzwerken zur Energieverteilung (smart grids).

Es ist ein Vorteil der vorliegenden Erfindung, dass bei einer Störung im Betrieb eines cyber-physischen Systems die Störungsursache zeitnah bestimmt werden kann. Insbesondere kann die Störungsursache parallel zum Betrieb des cyber-physischen Systems bestimmt werden, da die Ursachenermittlung mittels computergestützter Simulation des cyber-physischen Systems erfolgt. Außerdem können mit der vorgeschlagenen Lösung auch Cyberangriffe erkannt werden, welche bei einer klassischen Analyse des IT-Systems oft nicht oder nur schwer festgestellt werden können.

In einer vorteilhaften Ausführungsform der Vorrichtung kann das Simulationsmodul derart eingerichtet sein, die computergestützten Simulationsmodelle jeweils ausgehend von einem störungsfreien Ausgangszustand des cyber-physischen Systems auszuführen.

Vorzugsweise wird ein Ausgangszustand des cyber-physischen Systems bestimmt, bei dem noch keine Störung vorliegt, und als Ausgangszustand für die computergestützte Simulation mit Fehlerinjektion genutzt.

In einer weiteren Ausführungsform kann der störungsfreie Ausgangszustand durch eine vorgegebene Zeitspanne vor einer Detektion der Störung bestimmt sein.

Damit kann sichergestellt werden, dass ein Ausgangszustand gewählt wird, bei dem noch keine Systemstörung vorliegt. Die Zeitspanne kann beispielsweise anhand vorangegangener Störungen ermittelt werden.

In einer weiteren Ausführungsform kann das Analysemodul derart eingerichtet sein, eine Störungsursache der detektierten Störung bei einer Übereinstimmung des Ausgangssignals der Steuereinheit mit mindestens einem der modellierten Referenzausgangssignalen innerhalb einer vorgegebenen Unsicherheit zu ermitteln.

Dies hat den Vorteil, dass auch sich ähnelnde Ausgangssignale berücksichtigt werden können.

In einer weiteren Ausführungsform kann das Simulationsmodul derart eingerichtet sein, die computergestützten Simulationsmodelle zeitlich nach einer Detektion einer Störung und/oder in regelmäßigen Zeitabständen auszuführen.

In einer weiteren Ausführungsform kann eine Ausführungsreihenfolge der computergestützten Simulationsmodellen nach einem Ausführungskriterium erfolgen.

Ein Ausführungskriterium kann beispielsweise ein Worst-Case-Szenario oder eine zeitliche Kritikalität betreffen. So können beispielsweise verschiedene computergestützte Simulationsmodelle, die jeweils unterschiedliche Störungen im Betrieb des cyber-physischen Systems modellieren, abhängig von einem Schweregrad der jeweiligen Störung ausgeführt werden.

In einer weiteren Ausführungsform kann die Vorrichtung ein Detektionsmodul umfassen, das derart eingerichtet sein, eine Störung durch Vergleich eines Ausgangssignals der Steuereinheit mit einem modellierten Ausgangssignal einer computergestützten, störungsfreien Referenzsimulation des cyberphysischen Systems zu detektieren.

Insbesondere kann das Detektionsmodul eine solche Analyse in regelmäßigen Zeitabständen durchführen, so dass eine Störung bzw. Anomalie zeitnah erkannt werden kann.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel der erfindungsgemäßen Vorrichtung zur Bestimmung einer Störungsursache einer technischen Störung im Betrieb eines cyberphysischen Systems; und
- Fig. 2:: ein Ausführungsbeispiel des erfindungsgemäßen Verfahrens zur Bestimmung einer Störungsursache einer technischen Störung im Betrieb eines cyberphysischen Systems.

Einander entsprechende Teile sind in allen Figuren mit den gleichen Bezugszeichen versehen.

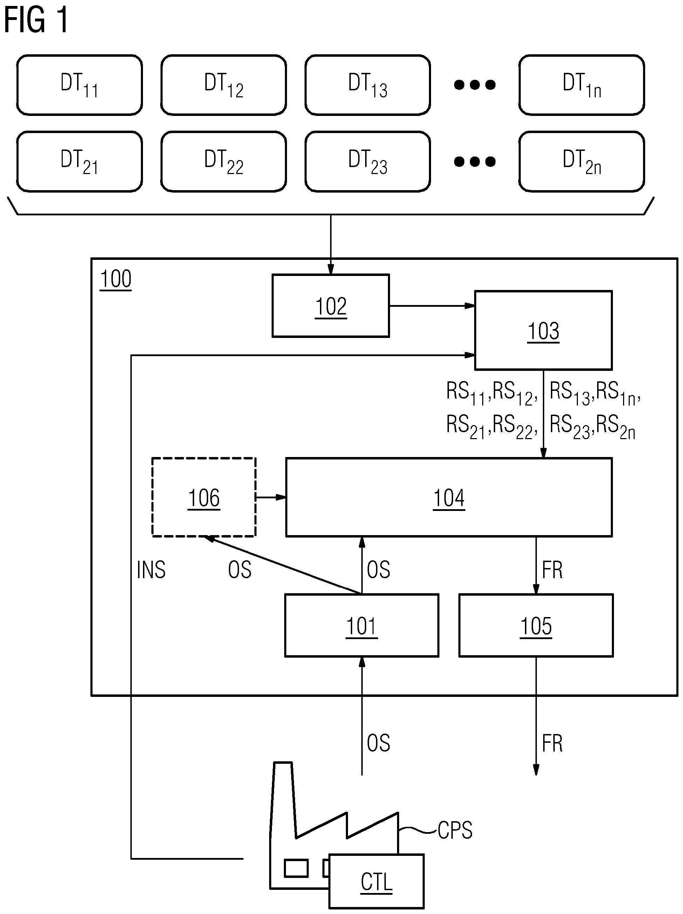

Figur 1 zeigt ein Ausführungsbeispiel einer erfindungsgemäßen Vorrichtung 100 zu zur Bestimmung einer Störungsursache einer technischen Störung im Betrieb eines cyber-physischen Systems CPS. Das cyber-physische System CPS kann beispielsweise eine Fabrikanlage sein. Die Vorrichtung 100 ist vorzugsweise mit dem cyber-physischen System CPS, insbesondere mit einer Steuereinheit CTL des cyber-physischen Systems, verbunden. Es ist auch möglich, dass die Vorrichtung 100 als Teil der Steuereinheit CTL oder dass die Vorrichtung 100 in der Cloud realisiert ist.

Die Ursache der Störung kann durch den Einsatz eines digitalen Zwillings des cyber-physischen Systems mit Fehlerinjektion bestimmt werden. Dazu können einerseits Ausfälle verschleißbehafteter Komponenten in den digitalen Zwilling injiziert werden, anderseits auch eine Vielzahl (vermuteter oder bereits dokumentierter) physikalischer Auswirkungen von Cyberangriffen auf das System, wie z.B. das Abschalten von Motoren, das Schließen von Ventilen für Kühlmittel oder die Erhöhung einer Motordrehzahl über eine Schädigungsgrenze hinaus. So entstehen aus dem digitalen Zwilling des Systems eine Vielzahl von digitalen Zwillingen, 1.) mit der jeweiligen Injektion von verschiedenen Komponentenausfällen bzw. Kombinationen von Komponentenausfällen und/oder 2.) mit der Injektion von verschiedenen physikalischen Auswirkungen bzw. Kombinationen von physikalischen Auswirkungen von Cyberangriffen auf das cyber-physische System. Die verschiedenen digitalen Zwillinge werden vorzugsweise alle mit dem Systemzustand unmittelbar vor dem Auftreten einer Störung initialisiert, parallel simuliert und daraufhin mit dem realen System verglichen. Dabei wird beispielsweise überprüft, ob der Zeitverlauf der simulierten Sensorwerte der Digitalen Zwillinge mit den Sensorwerten des realen Systems übereinstimmen und die Diagnosemeldungen der Steuerungen der digitalen Zwillinge mit denen der Steuerung des realen Systems übereinstimmen. Im Falle einer Übereinstimmung kann damit auf die Störungsursache geschlossen werden.

Die Vorrichtung 100 umfasst eine erste Schnittstelle 101, eine zweite Schnittstelle 102, ein Simulationsmodul 103, ein Analysemodul 104 und ein Ausgabemodul 105. Die Module sind vorzugsweise miteinander verbunden und können somit Daten/Informationen austauschen.

Die erste Schnittstelle 101 ist derart eingerichtet, ein einer detektierten Störung zugeordnetes Ausgangssignal OS der Steuereinheit CTL zu erfassen. Vorzugsweise bezieht sich das Ausgangssignal OS auf die detektierte Störung. Ein Ausgangssignal OS kann beispielsweise ein Warnsignal, Diagnosemeldung oder eine Fehlermeldung sein. Des Weiteren kann ein Ausgangssignal OS auch ein Steuerbefehl zur Steuerung einer Komponente des cyber-physischen Systems sein. Außerdem kann die erste Schnittstelle 101 eingerichtet sein, ein Sensorsignal eines Sensors des cyberphysischen Systems CPS zu erfassen.

Außerdem kann die Vorrichtung 100 ein Detektionsmodul 106 umfassen, das derart eingerichtet ist, eine Störung im Betrieb des cyber-physischen Systems zu detektieren. Ausgehend von der Störungsdetektion kann die Ursachenbestimmung angestoßen werden. Eine Störung kann beispielsweise eine Fehlfunktion des Systems und/oder ein Cyberangriff sein. Das Detektionsmodul 106 kann beispielsweise eine Störung durch Vergleich eines erfassten Ausgangssignals OS der Steuereinheit mit einem modellierten Ausgangssignal einer computergestützten, störungsfreien Referenzsimulation des cyber-physischen Systems detektieren. Alternativ oder zusätzlich kann eine Störung auch anhand eines Sensorsignals ermittelt werden, wobei beispielsweise ein erfasstes Sensorsignal des cyberphysischen Systems mit einem modellierten Sensorsignal einer computergestützten, störungsfreien Referenzsimulation des cyberphysischen Systems verglichen wird. In beiden Fällen kann eine Störung oder Anomalie durch eine (signifikante) Abweichung vom Referenzsignal detektiert werden. Nach der Detektion einer Störung kann der beschriebene Prozess zur Störungsursachenbestimmung getriggert werden. Dazu kann beispielsweise das Detektionsmodul 106 das Analysemodul 104 ansteuern.

Die zweite Schnittstelle 102 ist vorzugsweise mit einer Speichereinheit/einem Speicher verbunden und derart eingerichtet, eine Vielzahl von computergestützten Simulationsmodellen DT₁₁, DT₁₂, DT₁₃, ..., DT₁ₙ; DT₂₁, DT₂₂, DT₂₃, ..., DT₂ₙ von der Speichereinheit/einem Speicher einzulesen. Die Speichereinheit/der Speicher können beispielsweise als Teil der Vorrichtung 100 oder extern realisiert sein.

Die computergestützten Simulationsmodellen DT₁₁, DT₁₂, DT₁₃, ..., DT₁ₙ; DT₂₁, DT₂₂, DT₂₃, ..., DT₂ₙ sind jeweils eingerichtet, den Betrieb bzw. das physikalische Verhalten des cyber-physischen Systems und der Steuereinheit CTL unter Berücksichtigung einer modellierten Störung oder einer Kombination aus verschiedenen Störungen abzubilden. Dabei kann eine jeweilige, modellierte Störung ein Cyberangriff auf das cyber-physische System oder eine systeminhärente Fehlfunktion des cyberphysischen Systems als Störungsursache haben.

Die computergestützten Simulationsmodellen DT₁₁, DT₁₂, DT₁₃, ..., DT₁ₙ; DT₂₁, DT₂₂, DT₂₃, ..., DT₂ₙ können vorzugsweise Varianten eines störungsfreien/fehlerfreien computergestützten Simulationsmodells des cyber-physischen Systems sein, wobei jede Variante eine andere Störung des Betriebs des cyberphysischen Systems abbildet.

Das Simulationsmodul 103 ist derart eingerichtet, die computergestützten Simulationsmodelle DT₁₁, DT₁₂, DT₁₃, ..., DT₁ₙ; DT₂₁, DT₂₂, DT₂₃, ..., DT₂ₙ auszuführen und jeweils modellierte Referenzausgangssignale RS₁₁, RS₁₂, RS₁₃, ..., RS₁ₙ; RS₂₁, RS₂₂, RS₂₃, ..., RS₂ₙ auszugeben. Bei Ausführung eines computergestützten Simulationsmodells wird der Betrieb des cyberphysischen Systems CPS und die Steuereinheit CTL unter Berücksichtigung einer jeweiligen vorgegebenen Störung ausgehend von einem vorgegebenen Ausgangszustand für eine vorgegebene Zeitspanne computergestützt simuliert. Dabei wird ein Referenzausgangssignal generiert, das der jeweiligen Störung zugeordnet ist.

Somit ergibt sich für jede modellierte Störung mit einer jeweils zugeordneten Störungsursache ein modelliertes Referenzausgangssignal. Zum Beispiel wird für ein computergestütztes Simulationsmodell DT₁₁, das eine erste systeminhärente Störung modelliert, ein erstes modelliertes Referenzausgangssignal RS₁₁ ermittelt. Für einen ersten modellierten Cyberangriff DT₂₁ wird entsprechend ein weiteres modelliertes Referenzausgangssignal RS₂₁ ermittelt. Vorzugsweise werden die computergestützten Simulationsmodelle DT₁₁, DT₁₂, DT₁₃, ..., DT₁ₙ; DT₂₁, DT₂₂, DT₂₃, ..., DT₂ₙ nach einer Störungsdetektion durch das Detektionsmodul 101 ausgehend von einem störungsfreien Ausgangszustand INS des cyber-physischen Systems CPS ausgeführt. Der störungsfreie Ausgangszustand INS kann durch eine vorgegebene Zeitspanne vor der Detektion der Störung bestimmt werden. Alternativ oder zusätzlich können die computergestützten Simulationsmodelle DT₁₁, DT₁₂, DT₁₃, ..., DT₁ₙ; DT₂₁, DT₂₂, DT₂₃, ..., DT₂ₙ auch in regelmäßigen Zeitabständen jeweils von einem aktuellen Ausgangszustand des cyber-physischen Systems ausgeführt werden. Die computergestützten Simulationsmodelle DT₁₁, DT₁₂, DT₁₃, ..., DT₁ₙ; DT₂₁, DT₂₂, DT₂₃, ..., DT₂ₙ können entweder parallel oder gemäß einer Ausführungsreihenfolge sequenziell ausgeführt werden, wobei die Ausführungsreihenfolge in Abhängigkeit von einem Ausführungskriterium bestimmt wird. So kann beispielsweise die Ausführungsreihenfolge der computergestützten Simulationsmodelle in Abhängigkeit eines Schweregrads der jeweils modellierten Störung erfolgen, so dass schwerwiegende Störungen schneller erkannt werden können.

Das Analysemodul 104 ist derart eingerichtet, eine Störungsursache FR der detektierten Störung durch Vergleich des erfassten Ausgangssignals OS der Steuereinheit CTL mit den jeweils modellierten Referenzausgangssignalen RS₁₁, RS₁₂, RS₁₃, ..., RS₁ₙ; RS₂₁, RS₂₂, RS₂₃, ..., RS₂ₙ zu ermitteln. Vorzugsweise wird das Ausgangssignal OS mit jedem Referenzausgangssignal RS₁₁, RS₁₂, RS₁₃, ..., RS₁ₙ; RS₂₁, RS₂₂, RS₂₃, ..., RS₂ₙ verglichen. Alternativ kann der Vergleich auch bei einer ersten Übereinstimmung abgebrochen werden. Vorzugsweise wird eine Störungsursache der detektierten Störung ermittelt, wenn das Ausgangssignal OS mit einem der jeweils modellierten Referenzausgangssignalen RS₁₁, RS₁₂, RS₁₃, ..., RS₁ₙ; RS₂₁, RS₂₂, RS₂₃, ..., RS₂ₙ innerhalb einer vorgegebenen Unsicherheit übereinstimmt. Da jedem der Referenzausgangssignale eine Störungsursache zugeordnet ist, kann anhand des Vergleichs mit dem gemessenen Ausgangssignal OS eine Störungsursache FR ermittelt werden. Es ist auch möglich, dass mehr als eine Übereinstimmung zwischen dem Ausgangssignal und den Referenzausgangssignalen vorliegt. In diesem Fall können die jeweiligen Störungsursachen, ggf. mit Angabe eines Wahrscheinlichkeitswerts, ausgegeben werden.

Das Ausgabemodul 105 ist dazu eingerichtet, die ermittelte Störungsursache FR der detektierten Störung auszugeben. Beispielsweise kann die Störungsursache FR an die Steuereinheit CTL und/oder an ein Bedienfeld des cyber-physischen Systems zur Steuerung des Systems ausgegeben werden.

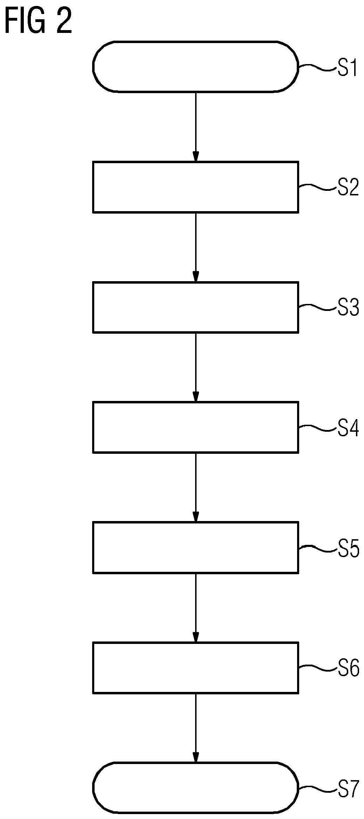

Figur 2 zeigt ein Ausführungsbeispiel des erfindungsgemäßen, computerimplementierten Verfahrens zur Bestimmung einer Störungsursache einer technischen Störung im Betrieb eines cyber-physischen Systems. Das abgebildete Flussdiagramm illustriert die Schritte des computerimplementierten Verfahrens.

Im ersten Schritt S1 des Verfahrens wird eine Störung im Betrieb des cyber-physischen Systems detektiert. Anschließend, im Schritt S2, wird ein der Störung entsprechenden Ausgangssignals einer Steuereinheit des cyber-physischen Systems erfasst. Das Verfahren wird insbesondere nach einer Fehlerdetektion/Anomaliedetektion eines Fehlers/einer Anomalie des cyber-physischen Systems durchgeführt.

Im nächsten Schritt S3 wird eine Vielzahl von computergestützten Simulationsmodellen eingelesen. Die computergestützten Simulationsmodelle sind insbesondere alle dazu eingerichtet, den Betrieb des cyber-physischen Systems und der Steuereinheit abzubilden, wobei jeweils eine andere Störung modelliert wird. Die jeweilige modellierte Störung hat dabei einen Cyberangriff auf das cyber-physische System oder eine systeminhärente Fehlfunktion des cyber-physischen Systems als Störungsursache. Vorzugsweise stammen die computergestützten Simulationsmodelle von einem störungsfreien Referenzsimulationsmodell ab, d.h. sind jeweils Varianten des störungsfreien Referenzsimulationsmodells, welches den störungsfreien Betrieb des cyber-physischen Systems und dessen Steuereinheit abbildet.

Im nächsten Schritt S4 werden die computergestützten Simulationsmodelle, beispielsweise in einer Simulationsumgebung, ausgeführt. Vorzugsweise werden die computergestützten Simulationsmodelle ausgehend von einem störungsfreien Systemzustand des cyber-physischen Systems ausgeführt. Die Ausführung der computergestützten Simulationsmodelle ergibt jeweils modellierte Referenzausgangssignale, denen eine jeweilige Störungsursache zugeordnet ist. Beispielsweise kann durch die Ausführung eines computergestützten Simulationsmodells mit injiziertem Cyberangriff auf das cyber-physische System ein charakteristisches Referenzausgangssignal für diesen Cyberangriff ermittelt werden.

Im nächsten Schritt S5 werden die jeweils modellierten Referenzausgangssignalen ausgegeben.

Im nächsten Schritt S6 wird mindestens eine Störungsursache der detektieren Störung durch Vergleich des Ausgangssignals der Steuereinheit mit den jeweils modellierten Referenzausgangssignalen ermittelt. Vorzugsweise findet sich eine genaue Übereinstimmung des Ausgangssignals mit einem der Referenzausgangssignale. Falls mehr als ein Referenzausgangssignal innerhalb einer vorgegebenen Unsicherheit mit dem gemessenen Ausgangssignal der Steuereinheit übereinstimmt, können auch verschiedene Störungsursachen oder eine Kombination aus verschiedenen Störungsursachen ermittelt werden.

Im nächsten Schritt S7 wird die mindestens eine identifizierte Störungsursache als die Störungsursache der detektierten Störung ausgegeben. Anschließend kann beispielsweise eine Wartung und/oder Abschaltung des cyber-physischen Systems erfolgen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Bestimmung einer Störungsursache einer technischen Störung im Betrieb eines cyber-physischen Systems (CPS), umfassend:
- eine erste Schnittstelle (101), die derart eingerichtet ist, ein einer detektierten Störung entsprechendes Ausgangssignal (OS) einer Steuereinheit (CTL) des cyber-physischen Systems (CPS) zu erfassen,
- eine zweite Schnittstelle (102), die derart eingerichtet ist, eine Vielzahl von computergestützten Simulationsmodellen (DT₁₁, DT₁₂, DT₁₃, ..., DT₁ₙ; DT₂₁, DT₂₂, DT₂₃, ..., DT₂ₙ) einzulesen, die jeweils eingerichtet sind, den Betrieb des cyberphysischen Systems und der Steuereinheit unter Berücksichtigung einer modellierten Störung abzubilden, wobei die jeweilige modellierte Störung einen Cyberangriff auf das cyber-physische System oder eine systeminhärente Fehlfunktion des cyber-physischen Systems als Störungsursache hat,
- ein Simulationsmodul (103), das derart eingerichtet ist, die computergestützten Simulationsmodelle (DT₁₁, DT₁₂, DT₁₃, ..., DT₁ₙ; DT₂₁, DT₂₂, DT₂₃, ..., DT₂ₙ) auszuführen und jeweils modellierte Referenzausgangssignale (RS₁₁, RS₁₂, RS₁₃, ..., RS₁ₙ; RS₂₁, RS₂₂, RS₂₃, ..., RS₂ₙ) auszugeben, wobei den modellierten Referenzausgangssignalen jeweils eine Störungsursache zugeordnet ist,
- ein Analysemodul (104), das derart eingerichtet ist, eine Störungsursache (FR) der detektierten Störung durch Vergleich des Ausgangssignals (OS) der Steuereinheit (CTL) mit den jeweils modellierten Referenzausgangssignalen (RS₁₁, RS₁₂, RS₁₃, ..., RS₁ₙ; RS₂₁, RS₂₂, RS₂₃, ..., RS₂ₙ) zu ermitteln,
und
- ein Ausgabemodul (105), das derart eingerichtet ist, die ermittelte Störungsursache (FR) der detektierten Störung auszugeben.

2. Vorrichtung nach Anspruch 1, wobei das Simulationsmodul (103) derart eingerichtet ist, die computergestützten Simulationsmodelle (DT₁₁, DT₁₂, DT₁₃, ..., DT₁ₙ; DT₂₁, DT₂₂, DT₂₃, ..., DT₂ₙ) jeweils ausgehend von einem störungsfreien Ausgangszustand (INS) des cyber-physischen Systems (CPS) auszuführen.

3. Vorrichtung nach Anspruch 2, wobei der störungsfreie Ausgangszustand durch eine vorgegebene Zeitspanne vor einer Detektion der Störung bestimmt ist.

4. Vorrichtung nach einem der vorhergehenden Ansprüche, wobei das Analysemodul (104) derart eingerichtet ist, eine Störungsursache der detektierten Störung bei einer Übereinstimmung des Ausgangssignals (OS) der Steuereinheit mit mindestens einem der modellierten Referenzausgangssignalen (RS₁₁, RS₁₂, RS₁₃, ..., RS₁ₙ; RS₂₁, RS₂₂, RS₂₃, ..., RS₂ₙ) innerhalb einer vorgegebenen Unsicherheit zu ermitteln.

5. Vorrichtung nach einem der vorhergehenden Ansprüche, wobei das Simulationsmodul (103) derart eingerichtet ist, die computergestützten Simulationsmodelle (DT₁₁, DT₁₂, DT₁₃, ..., DT₁ₙ; DT₂₁, DT₂₂, DT₂₃, ..., DT₂ₙ) zeitlich nach einer Detektion einer Störung und/oder in regelmäßigen Zeitabständen auszuführen.

6. Vorrichtung nach einem der vorhergehenden Ansprüche, wobei eine Ausführungsreihenfolge der computergestützten Simulationsmodellen (DT₁₁, DT₁₂, DT₁₃, ..., DT₁ₙ; DT₂₁, DT₂₂, DT₂₃, ..., DT₂ₙ) nach einem Ausführungskriterium erfolgt.

7. Vorrichtung nach einem der vorhergehenden Ansprüche weiter umfassend ein Detektionsmodul (106), das derart eingerichtet ist, eine Störung durch Vergleich eines Ausgangssignals (OS) der Steuereinheit mit einem modellierten Ausgangssignal einer computergestützten, störungsfreien Referenzsimulation des cyber-physischen Systems zu detektieren.

8. Computerimplementiertes Verfahren zur Bestimmung einer Störungsursache einer technischen Störung im Betrieb eines cyber-physischen Systems, mit den Verfahrensschritten:
- Erfassen (S2) eines einer detektierten Störung entsprechenden Ausgangssignals (OS) einer Steuereinheit (CTL) des cyberphysischen Systems (CPS),
- Einlesen (S3) einer Vielzahl von computergestützten Simulationsmodellen (DT₁₁, DT₁₂, DT₁₃, ..., DT₁ₙ; DT₂₁, DT₂₂, DT₂₃, ..., DT₂ₙ), die jeweils eingerichtet sind, den Betrieb des cyberphysischen Systems und der Steuereinheit unter Berücksichtigung einer modellierten Störung abzubilden, wobei die jeweilige modellierte Störung einen Cyberangriff auf das cyber-physische System oder eine systeminhärente Fehlfunktion des cyber-physischen Systems als Störungsursache hat,
- Ausführen (S4) der computergestützten Simulationsmodelle (DT₁₁, DT₁₂, DT₁₃, ..., DT₁ₙ; DT₂₁, DT₂₂, DT₂₃, ..., DT₂ₙ),
- Ausgeben (S5) von jeweils modellierten Referenzausgangssignalen (RS₁₁, RS₁₂, RS₁₃, ..., RS₁ₙ; RS₂₁, RS₂₂, RS₂₃, ..., RS₂ₙ), denen eine jeweilige Störungsursache zugeordnet ist,
- Ermitteln (S6) einer Störungsursache (FR) der detektieren Störung durch Vergleich des Ausgangssignals der Steuereinheit mit den jeweils modellierten Referenzausgangssignalen (RS₁₁, RS₁₂, RS₁₃, ..., RS₁ₙ; RS₂₁, RS₂₂, RS₂₃, ..., RS₂ₙ),
und
- Ausgeben (S7) der ermittelten Störungsursache (FR) der detektierten Störung.

9. Computerprogrammprodukt, das direkt in einen programmierbaren Computer ladbar ist, umfassend Programmcodeteile, die dazu geeignet sind, die Schritte des Verfahrens nach Anspruch 8 durchzuführen.
